# EUROPEAN PATENT APPLICATION

(11) **EP 4 395 056 A1**
(43) Date of publication of application: **03.07.2024**
(21) Application number: 23806544.5
(22) Date of filing: 21.02.2023
(51) Int. Cl.: H01M 50/583, H01M 50/147, H01M 10/0525

(54) **END COVER ASSEMBLY, BATTERY CELL, BATTERY AND ELECTRIC DEVICE**

(30) Priority: 18.05.2022 CN 202221198240 U
(71) Applicant: Contemporary Amperex Technology Co., Limited, Ningde, Fujian 352100 (CN)
(72) Inventor: WU, Guanfang, Ningde, Fujian 352100 (CN); ZHUO, Weirong, Ningde, Fujian 352100 (CN); LI, Zhiling, Ningde, Fujian 352100 (CN)
(74) Representative: Gong, Jinping
(86) International application number: PCT/CN2023/077317
(87) International publication number: WO 2023/221583

(57) **Abstract**

Provided are an end cap assembly, a battery cell, a battery and a power consuming device. The end cap assembly includes: an end cap provided with a positive electrode terminal, an insulating member being provided between the positive electrode terminal and the end cap; and a fuse structure, the fuse structure electrically connecting the end cap to the positive electrode terminal. The fuse structure is configured to be capable of melting when a current flowing through the fuse structure is greater than a predetermined threshold. With the technical solution of the present application, the performance of the battery can be improved.

## Description

### Cross-Reference to Related Application

The present application claims the priority of Chinese patent application CN 202221198240.3, entitled "END CAP ASSEMBLY, BATTERY CELL, BATTERY, AND POWER CONSUMING DEVICE" and filed on May 18, 2022, which is incorporated herein by reference in its entirety.

### Technical Field

The present application relates to the technical field of batteries, and in particular to an end cap assembly, a battery cell, a battery and a power consuming device.

### Background Art

Energy conservation and emission reduction are the keys to the sustainable development of the automobile industry. In this context, electric vehicles play an important part in the sustainable development of the automobile industry because of their advantages in energy conservation and environmental protection. Further, for the electric vehicles, the battery technology is an important factor to their development.

An end cap assembly in a battery cell is crucial to the performance of a battery. Therefore, how to provide an end cap assembly to improve the performance of a battery is a technical problem urgently needing to be solved.

### Summary

Embodiments of the present application provide an end cap assembly, a battery cell, a battery, and a power consuming device, which can improve the performance of the battery.

In a first aspect, an embodiment of the present application provides an end cap assembly for a battery cell, the end cap assembly including: an end cap provided with a positive electrode terminal, an insulating member being provided between the positive electrode terminal and the end cap; and a fuse structure, the fuse structure electrically connecting the end cap to the positive electrode terminal, wherein the fuse structure is configured to be capable of melting when a current flowing through the fuse structure is greater than a predetermined threshold.

In the embodiment of the present application, the end cap assembly includes the end cap and the fuse structure, wherein the end cap is provided with the positive electrode terminal, and the insulating member is provided between the positive electrode terminal and the end cap to insulate the positive electrode terminal from the end cap when the battery cell is in a normal working condition; and the fuse structure electrically connects the end cap to the positive electrode terminal, so that the potential of the end cap is the same as that of the positive electrode terminal, that is, the potential of a housing of the battery cell is the same as the potential of the positive electrode terminal, the potential of the housing is thus higher than that of the negative electrode terminal, and the risk of the housing being corroded can be reduced. The fuse structure is configured to be capable of melting when the current flowing through the fuse structure is greater than the predetermined threshold, so that when an external short-circuit test is performed on a battery module or short circuiting occurs outside the battery module, once a current circuit inside a battery cell is disconnected, the remaining battery cells in the battery module generate a reverse voltage outside the battery cell, thus generating a current flowing through the fuse structure. When the current is greater than the predetermined threshold, the fuse structure is disconnected, and the positive electrode terminal and the end cap are insulated from each other so as to withstand most of the reverse voltage. In this way, the voltage between the negative electrode terminal and the end cap or the housing is lower, so that the risk of electrolysis of an electrolyte solution can thus be reduced, and the risk of fire or other phenomena can then be reduced. Therefore, the performance of the battery can be improved with the technical solution of the embodiment of the present application.

In a possible implementation, the predetermined threshold is 0.1 A-10 A. In this way, it can be ensured that when the current flowing through the fuse structure exceeds the predetermined threshold, the fuse structure can melt in a timely manner, and the reliability of the battery can thus be improved.

In a possible implementation, the insulating member is provided between the positive electrode terminal and the end cap in a thickness direction of the end cap. In this way, by providing the insulating member between the positive electrode terminal and the end cap in the thickness direction of the end cap, the positive electrode terminal can be insulated from the end cap in a normal working condition of the battery cell.

In a possible implementation, a surface of the positive electrode terminal protruding out of the end cap is provided with a notch, and a first end of the fuse structure is accommodated in the notch so as to be connected to the positive electrode terminal. In this way, a space occupied by the fuse structure in the thickness direction of the end cap assembly can be saved; and the fuse structure can also be prevented from protruding out of the positive electrode terminal, and the assembly of the end cap assembly is thus facilitated.

In a possible implementation, the end cap assembly is a square end cap assembly, the notch is provided at a first position of the positive electrode terminal, and a connection direction between the first position and the center of the positive electrode terminal is defined as a first direction; and the end cap is further provided with a negative electrode terminal, a connection direction between the center of the negative electrode terminal and the center of the positive electrode terminal is defined as a second direction, and the first direction is different from the second direction. In this way, it is possible to avoid the problem of the notch being closer to an edge of the end cap in the second direction due to space insufficiency of the end cap in the second direction. Accordingly it is possible to avoid the problem of insufficient mounting space of the fuse structure due to an improper position of the notch.

In a possible implementation, the first direction is perpendicular to the second direction. In this way, the notch is farther away from the edge of the end cap, facilitating the mounting of the fuse structure.

In a possible implementation, the end cap assembly is a circular end cap assembly, the notch is provided at a second position of the positive electrode terminal, and the second position is a position on an edge of the positive electrode terminal. In this way, the notch is located at the edge of the positive electrode terminal, facilitating the decrease of a distance between the notch and the end cap and thus facilitating the decrease of the length of the fuse structure, thereby reducing costs.

In a possible implementation, the second position is a position on the edge of the positive electrode terminal that is farthest away from an edge of the end cap assembly. In this way, the notch is farther away from the edge of the end cap, facilitating the mounting of the fuse structure.

In a possible implementation, the notch has a size of 1 mm-2 mm in a thickness direction of the positive electrode terminal. In this way, the notch may have an appropriate size range in the thickness direction of the positive electrode terminal to facilitate the accommodation of the fuse structure.

In a possible implementation, the notch has a size of 1 mm-4 mm in a third direction, the third direction is an extension direction of the first end of the fuse structure, and the third direction is perpendicular to the thickness direction of the positive electrode terminal. In this way, the notch has an appropriate size in the third direction, facilitating the accommodation of the first end of the fuse structure.

In a possible implementation, the notch has a size of 1 mm-2 mm in a fourth direction, and the fourth direction is perpendicular to the third direction and the thickness direction of the positive electrode terminal. In this way, it is convenient to accommodate the first end of the fuse structure in the notch.

In a possible implementation, the fuse structure is a fuse wire. In this way, the fuse structure is simple in structure and convenient to machine, facilitating the reduction of costs.

In a possible implementation, a protective structure is provided on an outer surface of the fuse wire. In this way, it is possible to avoid short circuiting or other phenomena caused by the contact between the fuse wire and other components, and it is also possible to prevent the fuse wire from breaking due to an external force.

In a possible implementation, the fuse wire has a cross-sectional area of 0.01 mm²-0.20 mm². In this way, the machining and formation the fuse wire are facilitated.

In a possible implementation, the fuse structure is attached to the insulating member. In this way, the reduction of the space occupied by the fuse structure is facilitated, and the reduction of the impact of the external force on the fuse structure is also facilitated.

In a second aspect, an embodiment of the present application provides a battery cell, including: an electrode assembly; a housing having an opening and configured to accommodate the electrode assembly; and an end cap assembly as described in the first aspect or any possible implementation of the first aspect, the end cap assembly covering the opening so as to enclose the electrode assembly in the housing.

In a third aspect, an embodiment of the present application provide a battery, including: a battery cell as described in the second aspect; and a case, the case being configured to accommodate the battery cell.

In a fourth aspect, an embodiment of the present application provides a power consuming device, including a battery as described in the third aspect, wherein the battery is configured to supply electric energy.

In the embodiment of the present application, the end cap assembly includes the end cap and the fuse structure, wherein the end cap is provided with the positive electrode terminal, and the insulating member is provided between the positive electrode terminal and the end cap to insulate the positive electrode terminal from the end cap when the battery cell is in a normal working condition; and the fuse structure electrically connects the end cap to the positive electrode terminal, so that the potential of the end cap is the same as that of the positive electrode terminal, that is, the potential of a housing of the battery cell is the same as the potential of the positive electrode terminal, the potential of the housing is thus higher than that of the negative electrode terminal, and the risk of the housing being corroded can be reduced. The fuse structure is configured to be capable of melting when the current flowing through the fuse structure is greater than the predetermined threshold, so that when an external short-circuit test is performed on a battery module or short circuiting occurs outside the battery module, once a current circuit inside a battery cell is disconnected, the remaining battery cells in the battery module generate a reverse voltage outside the battery cell, thus generating a current flowing through the fuse structure. When the current is greater than the predetermined threshold, the fuse structure is disconnected, and the positive electrode terminal and the end cap are insulated from each other so as to withstand most of the reverse voltage. In this way, the voltage between the negative electrode terminal and the end cap or the housing is lower, so that the risk of electrolysis of an electrolyte solution can thus be reduced, and the risk of fire or other phenomena can then be reduced. Therefore, the performance of the battery can be improved with the technical solution of the embodiment of the present application.

### Brief Description of the Drawings

To more clearly illustrate the technical solutions of embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
Fig. 1 is a schematic diagram of a vehicle according to an embodiment of the present application;
Fig. 2 is a schematic diagram of a battery according to an embodiment of the present application;
Fig. 3 is a schematic diagram of a battery cell according to an embodiment of the present application;
Fig. 4 is a schematic diagram of an end cap assembly of a battery cell according to an embodiment of the present application;
Fig. 5 is an enlarged schematic diagram of region A in Fig. 4;
Fig. 6 is a schematic diagram of an external short-circuit test on a battery module according to an embodiment of the present application;
Fig. 7 is a schematic diagram of an end cap assembly of a battery cell according to an embodiment of the present application; and
Fig. 8 is an enlarged schematic diagram of region B in Fig. 7.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of' means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for ease of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "a plurality of' appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matter from affecting charging or discharging of the battery cell(s).

The case of the battery in the embodiments of the present application is configured to accommodate a plurality of battery cells, a bus component, and other components of the battery. In some embodiments, a structure for fixing the battery cells may further be provided in the case. The shape of the case may be determined according to the plurality of battery cells accommodated. In some embodiments, the case may be a cube having six walls.

The bus component mentioned in the present application is configured to implement an electric connection between the plurality of battery cells, such as a parallel connection, a series connection or a series-parallel connection. The bus component may implement the electric connection between the battery cells by connecting electrode terminals of the battery cells. In some embodiments, the bus component may be fixed to an electrode terminal of a battery cell by means of welding.

An end cap assembly in the battery cell is crucial to the performance of the battery. Typically, a seal having an insulating member is provided between an end cap and the electrode terminal, so as to insulate the end cap or a housing of the battery cell from the electrode terminal. However, such an arrangement will make the potential of the housing lower, thus causing the housing to be corroded by an electrolyte solution. In order to solve the corrosion problem of the housing, the insulating seal is replaced with a seal with a certain resistance. However, this seal is prone to breakdown when a voltage is higher, thus causing potential safety hazards such as sparking. Therefore, how to provide an end cap assembly to improve the performance of a battery is a problem urgently needing to be solved.

In view of this, an embodiment of the present application provides an end cap assembly. The end cap assembly includes an end cap and a fuse structure, wherein the end cap is provided with a positive electrode terminal, and an insulating member is provided between the positive electrode terminal and the end cap to insulate the positive electrode terminal from the end cap when the battery cell is in a normal working condition; and the fuse structure electrically connects the end cap to the positive electrode terminal, so that the potential of the end cap is the same as that of the positive electrode terminal, that is, the potential of a housing of the battery cell is the same as the potential of the positive electrode terminal, the potential of the housing is thus higher than that of the negative electrode terminal, and the risk of the housing being corroded can be reduced. The fuse structure is configured to be capable of melting when the current flowing through the fuse structure is greater than the predetermined threshold, so that when an external short-circuit test is performed on a battery module or short circuiting occurs outside the battery module, once a current circuit inside a battery cell is disconnected, the remaining battery cells in the battery module generate a reverse voltage outside the battery cell, thus generating a current flowing through the fuse structure. When the current is greater than the predetermined threshold, the fuse structure is disconnected, and the positive electrode terminal and the end cap are insulated from each other so as to withstand most of the reverse voltage. In this way, the voltage between the negative electrode terminal and the end cap or the housing is lower, so that the risk of electrolysis of an electrolyte solution can thus be reduced, and the risk of fire or other phenomena can then be reduced. Therefore, the performance of the battery can be improved with the technical solution of the embodiment of the present application.

The technical solutions described in the embodiments of the present application are all applicable to various devices using batteries, such as mobile phones, portable apparatuses, laptops, battery cars, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using batteries. However, for ease of brevity of description, the following embodiments will be described by taking an electric vehicle as an example.

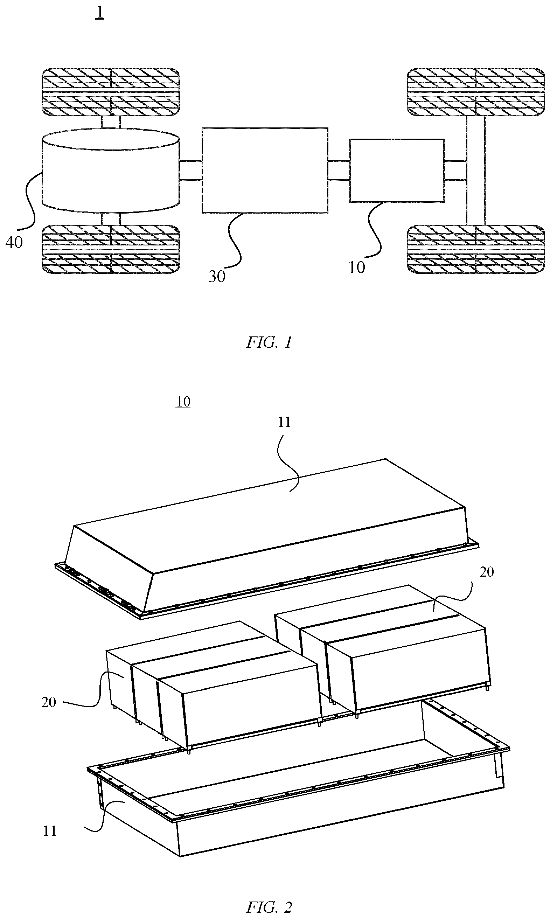

For example, Fig. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a motor 40, a controller 30 and a battery 10. The controller 30 is configured to control the battery 10 to supply power to the motor 40. For example, the battery 10 may be provided at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery 10 may include a plurality of battery cells in order to meet different power demands. For example, Fig. 2 shows a schematic structural diagram of a battery 10 according to an embodiment of the present application. The battery 10 may include a plurality of battery cells 20. The battery 10 may further include a case 11. The case 11 has a hollow structure, and the plurality of battery cells 20 are accommodated inside the case 11. For example, the plurality of battery cells 20 are in parallel connection, in series connection or in series-parallel connection, and are then provided inside the case 11.

Optionally, the battery 10 may further include other structures, which will not be described in detail herein. For example, the battery 10 may further include a bus component. The bus component is configured to achieve an electric connection, such as parallel connection, series connection, or series-parallel connection, between the plurality of battery cells 20. Specifically, the bus component may implement the electrical connection between the battery cells 20 by connecting electrode terminals of the battery cells 20. Further, the bus component may be fixed to the electrode terminal of the battery cell 20 by means of welding. Electric energy of the plurality of battery cells 20 may be further led out by means of an electrically conductive mechanism passing through the case. Optionally, the electrically conductive mechanism may also be a part of the bus component.

Any number of battery cells 20 may be configured according to different power demands. The plurality of battery cells 20 may be connected in series, in parallel or in series-parallel, so as to achieve high capacity or power. Since each battery 10 may include a large number of battery cells 20, and for ease of mounting, the battery cells 20 may be provided in groups, and each group of battery cells 20 forms a battery module. The number of battery cells 20 included in the battery module is not limited and may be set according to demands. The battery may include a plurality of battery modules that may be in series connection, in parallel connection or in series-parallel connection.

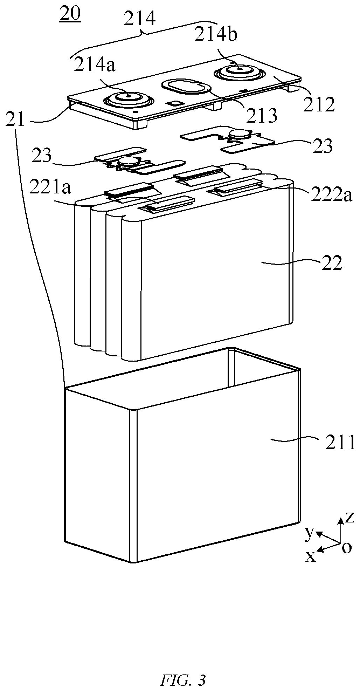

Fig. 3 shows a schematic structural diagram of a battery cell 20 according to an embodiment of the present application. The battery cell 20 includes one or more electrode assemblies 22, a housing 211, and an end cap 212. The housing 211 and the end cap 212 form a shell or a battery box 21. Walls of the housing 211 and the end cap 212 are both referred to as walls of the battery cell 20. For a cuboid battery cell 20, the walls of the housing 211 include a bottom wall and four side walls. The housing 211 may be determined according to the shape of a combination of the one or more electrode assemblies 22. For example, the housing 211 may be a hollow cuboid, cube or cylinder, and one of surfaces of the housing 211 has an opening such that the one or more electrode assemblies 22 can be provided in the housing 211. For example, when the housing 211 is a hollow cuboid or cube, one flat face of the housing 211 is an opening face, i.e., the flat face has no wall, so that the inside and outside of the housing 211 are in communication with each other. When the housing 211 is a hollow cylinder, an end face of the housing 211 is an opening face, i.e., the end face has no wall, so that the inside and outside of the housing 211 are in communication with each other. The end cap 212 covers the opening and is connected to the housing 211 so as to form a closed cavity in which the electrode assembly 22 is placed. The housing 211 is filled with an electrolyte, such as an electrolyte solution.

The battery cell 20 may further include two electrode terminals 214, and the two electrode terminals 214 may be provided on the end cap 212. The end cap 212 is generally in the form of a flat plate, the two electrode terminals 214 are fixed to a flat plate face of the end cap 212, and the two electrode terminals 214 are respectively a positive electrode terminal 214a and a negative electrode terminal 214b. Each electrode terminal 214 is correspondingly provided with a connecting member 23, or referred to as a current collecting member 23, which is located between the end cap 212 and the electrode assembly 22 to implement the electrical connection between the electrode assembly 22 and the electrode terminal 214.

A pressure relief mechanism may further be provided on the battery cell 20. The pressure relief mechanism is configured to be actuated, when an internal pressure or temperature of the battery cell 20 reaches a threshold, so as to relieve the internal pressure or temperature.

The pressure relief mechanism may be of a variety of possible pressure relief structures, which are not limited in the embodiments of the present application. For example, the pressure relief mechanism may be a temperature-sensitive pressure relief mechanism that is configured to be meltable when the internal temperature of the battery cell 20 provided with the pressure relief mechanism reaches the threshold; and/or the pressure relief mechanism may be a pressure-sensitive pressure relief mechanism that is configured to be fracturable when the internal gas pressure of the battery cell 20 provided with the pressure relief mechanism reaches the threshold.

As shown in Fig. 3, each electrode assembly 22 is provided with a first tab 221a and a second tab 222a. The first tab 221a and the second tab 222a have opposite polarities. For example, when the first tab 221a is a positive tab, the second tab 222a is a negative tab. The first tab 221a of the one or more electrode assemblies 22 is connected to an electrode terminal by means of a connecting member 23, and the second tab 222a of the one or more electrode assemblies 22 is connected to another electrode terminal by means of another connecting member 23. For example, the positive electrode terminal 214a is connected to the positive tab by means of one connecting member 23, and the negative electrode terminal 214b is connected to the negative tab by means of another connecting member 23.

In the battery cell 20, according to actual usage requirements, one or more electrode assemblies 22 may be provided. As shown in Fig. 3, four independent electrode assemblies 22 are provided in the battery cell 20.

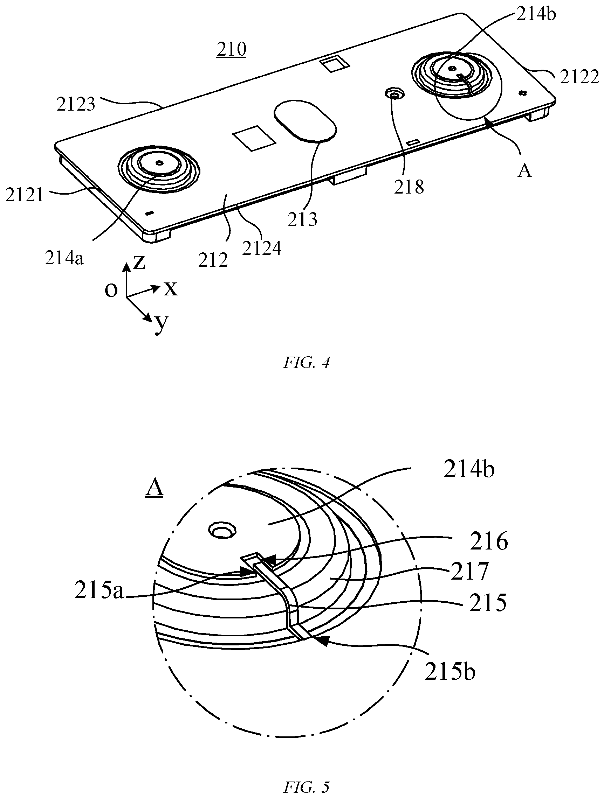

Fig. 4 is a schematic diagram of an end cap assembly according to an embodiment of the present application, and Fig. 5 is an enlarged schematic diagram of region A in Fig. 4. As shown in Fig. 4, the end cap assembly 210 is used for the battery cell 20, and the end cap assembly 210 includes an end cap 212 and a fuse structure 215. The end cap 212 is provided with a positive electrode terminal 214b, and an insulating member 217 is provided between the positive electrode terminal 214b and the end cap 212. The fuse structure 215 electrically connects the end cap 212 to the positive electrode terminal 214b. The fuse structure 215 is configured to be capable of melting when a current flowing through the fuse structure 215 is greater than a predetermined threshold.

The end cap assembly 210 is configured to cover a housing 21 of the battery cell 20 so as to seal the battery cell 20.

The end cap 212 is provided with the positive electrode terminal 214b, and the insulating member 217 is provided between the positive electrode terminal 214b and the end cap 212. In this way, the positive electrode terminal 214b can be insulated from the end cap 212 in a normal working condition of the battery cell 20. In the normal working condition, the current does not flow through the fuse structure 215.

Optionally, the insulating member 217 may be made of an insulating plastic, so that the sealing is implemented between the positive electrode terminal 214b and the end cap 212 while the insulation therebetween is ensured.

The fuse structure 215 electrically connects the end cap 212 to the positive electrode terminal 214b. The electrode terminals 214 include the positive electrode terminal 214b and the negative electrode terminal 214a, the electrode terminals 214 are electrically connected to the electrode assembly 22 by means of the connecting members 23, and the electrode assembly 22 is electrically connected to the housing 21. In this way, the end cap 212 is electrically connected to the housing 21 by means of the fuse structure 215, so that the potential of the housing 21 is equal to that of the positive electrode terminal 214b, it can be avoided that the potential of the housing 21 is lower than that of the negative electrode terminal 214a, and thus preventing the housing 21 from being corroded.

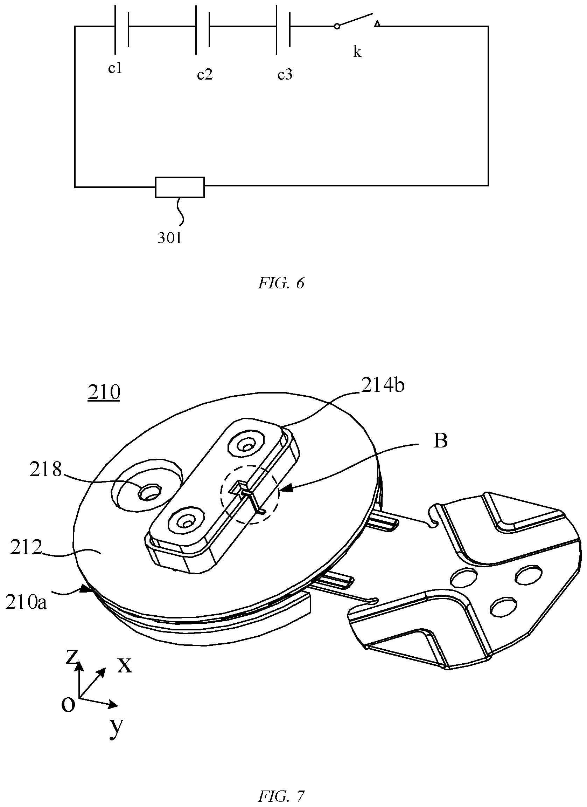

Fig. 6 is a schematic diagram of an external short-circuit test on a battery module according to an embodiment of the present application. Optionally, as shown in Fig. 6, the battery module includes battery cells c1, c2, c3 connected in series, an external short-circuit component 301 is connected to the battery module, and short circuiting occurs after a switch k is closed. Since a fuse member is typically provided inside the battery cell, when short circuiting occurs, the internal fuse member of the battery cell c1 is disconnected. In this case, a reverse voltage having a voltage value U is generated outside the battery cell c1, where U = Uc2 + Uc3. This reverse voltage may cause electrolysis inside the battery cell c1, for example, electrolysis of the electrolyte solution inside the electrolyte battery cell c1, and heat accumulation, causing fire or other phenomena. It should be noted that the present application only takes a battery module including three battery cells connected in series as an example. In practice, a greater number of battery cells may be provided, and the battery cells may also be connected in parallel-series or in parallel.

The external short-circuit test can simulate the abuse of the battery module or external short circuiting of the battery module during use or under an extreme condition. During the external short-circuit test, if the battery catches fire, explodes, etc., it may cause the external short-circuit test to fail, that is, it is impossible to distinguish whether the fire is caused by the battery itself or the external short-circuit test. The fire caused by the battery itself may be caused by a fault inside the battery, which is not specifically limited in the embodiment of the present application.

The fuse structure 215 is configured to be capable of melting when the current flowing through the fuse structure 215 is greater than the predetermined threshold. When the reverse voltage U is applied to the battery cell c1, a current is generated to flow through the battery cell c1, and the current flows through the end cap 212, the fuse structure 215 and the positive electrode terminal 214b. When the current is greater than the predetermined threshold, the fuse structure 215 melts. After the fuse structure 215 melts, since the insulating member 217 is provided between the positive electrode terminal 214b and the end cap 212, the positive electrode terminal 214b is insulated from the end cap 212, and thus most of the reverse voltage U between the positive electrode terminal 214b and the end cap 212 can be withstood. In this way, the voltage between the negative electrode terminal 214a and the end cap 212 (or the housing 21) is lower, so that the voltage between the negative electrode terminal 214a and the housing 21 can be prevented from electrolyzing the electrolyte solution, and thus the fire or other phenomena caused by the battery cell c1 being out of control can be avoided. Therefore, the fuse structure 215 can reduce the risk of fire or other phenomena during the external short-circuit test of the battery module, and thus the reliability of the battery can be improved. In addition, by providing the fuse structure 215, the requirements of the battery module for the external short-circuit test can be met, the risk of the fire or other phenomena can be reduced during the external short-circuit test, and thus the risk of failure of the external short-circuit test can be reduced.

In a battery cell in the related art, a positive electrode terminal of the battery cell is directly electrically connected to the end cap, and the battery cell is not provided with the fuse structure 215 in the present application. When an external short-circuit test is performed, short circuiting occurs, and an internal fuse member of a battery cell, such as the battery cell c1, is disconnected. In this case, the voltage of the remaining battery cells serves as a reverse voltage applied to the battery cell c1. Since the positive electrode terminal is electrically connected to the end cap or a housing, and a negative electrode terminal is not electrically connected to the housing, the voltage between the negative electrode terminal and the housing is basically the same as the reverse voltage U applied to the battery cell, and the voltage between the negative electrode terminal and the housing electrolyzes an electrolyte solution, causing the fire or other phenomena.

For the content related to the external short-circuit test method for the battery module that is not mentioned in the embodiments of the present application, reference can be specifically made to UN38.3, GB/T31485-2015 or GB/T36276-2018, which will not be repeated herein.

In another battery cell in the related art, a conductive plastic is provided between a positive electrode terminal and an end cap of the battery cell, the conductive plastic has a resistance value of 1 Ω-10000 Ω, and the battery cell is not provided with the fuse structure 215 in the present application. When an external short-circuit test is performed, short circuiting occurs, and an internal fuse member of a battery cell, such as c1, is disconnected. In this case, the voltage of the remaining battery cells serves as a reverse voltage applied to the battery cell c1. In this case, due to the presence of the conductive plastic, most of the reverse voltage withstood between the positive electrode terminal and the end cap will break down the conductive plastic. After breakdown, the resistance value of the conductive plastic is almost negligible, so that the voltage between the negative electrode terminal and the housing is basically the same as the reverse voltage U applied to the battery cell, and the voltage between the negative electrode terminal and the housing electrolytes an electrolyte solution, causing the fire or other phenomena.

Optionally, the fuse structure 215 may include a low-melting-point, arc-extinguishing metal material such as copper, silver, zinc, lead, or a lead-tin alloy.

An embodiment of the present application provides an end cap assembly 210. The end cap assembly 210 includes an end cap 212 and a fuse structure 215. The end cap 212 is provided with a positive electrode terminal 214b, and an insulating member 217 is provided between the positive electrode terminal 214b and the end cap 212 to insulate the positive electrode terminal 214b from the end cap 212 when the battery cell is in a normal working condition. The fuse structure 215 electrically connects the end cap 212 to the positive electrode terminal 214b, so that the potential of the end cap 212 is the same as that of the positive electrode terminal 214b, that is, the potential of the housing 21 of the battery cell is the same as the potential of the positive electrode terminal 214b, the potential of the housing 21 is thus higher than that of a negative electrode terminal 214a, and the housing 21 can be prevented from being corroded. The fuse structure 215 is configured to be capable of melting when the current flowing through the fuse structure 215 is greater than a predetermined threshold, so that when an external short-circuit test is performed on the battery module, once the current circuit inside a battery cell is disconnected, the remaining battery cells in the battery module generate a reverse voltage outside the battery cell, thus generating a current flowing through the fuse structure 215. When the current is greater than the predetermined threshold, the fuse structure is disconnected, and the positive electrode terminal 214b and the end cap 212 are insulated from each other so as to withstand most of the reverse voltage. In this way, the voltage between the negative electrode terminal 214a and the end cap 212 or the housing 21 is lower, so that the electrolysis of the electrolyte solution can be avoided, the fire or other phenomena can then be avoided, the requirements for the external short-circuit test are also be met, and the failure of the external short-circuit test is avoided. Therefore, the technical solution of this embodiment of the present application can meet the requirements for the external short-circuit test while ensuring the performance of the battery.

Optionally, in an embodiment of the present application, the predetermined threshold is 0.1 A-10 A. The predetermined threshold indicates the breaking capacity of the fuse structure 215, that is, the range of a maximum current that the fuse structure 215 can withstand is 0.1 A-10 A. For example, the predetermined threshold is 0.2 A. When the current flowing through the fuse structure 215 is greater than 0.2 A, the fuse structure 215 melts. In this way, it can be ensured that when the current flowing through the fuse structure 215 exceeds the predetermined threshold, the fuse structure 215 can melt in a timely manner, thereby ensuring the safety of the battery.

Optionally, in an embodiment of the present application, as shown in Figs. 4 and 5, the insulating member 217 is provided between the positive electrode terminal 214b and the end cap 212 in a thickness direction of the end cap 212.

The thickness direction of the end cap 212 may be the z direction. By providing the insulating member 217 between the positive electrode terminal 214b and the end cap 212 in the z direction, the positive electrode terminal 214b can be insulated from the end cap 212 in the normal working condition of the battery cell.

Optionally, in an embodiment of the present application, a surface of the positive electrode terminal 214b protruding out of a surface of the end cap 212 is provided with a notch 216, and a first end 215a of the fuse structure 215 is accommodated in the notch 216 so as to be connected to the positive electrode terminal 214b.

The first end 215a of the fuse structure 215 may be an end of the fuse structure 215 close to the notch 216. By providing the notch 216 in the surface of the positive electrode terminal 214b protruding out of the end cap 212, and by accommodating the first end 215a of the fuse structure 215 in the notch 216 so as to be connected to the positive electrode terminal 214b, a space occupied by the fuse structure 215 in the thickness direction of the end cap assembly 210 can be saved; and the fuse structure 215 can also be prevented from protruding out of the positive electrode terminal 214b, and the assembly of the end cap assembly 210 is thus facilitated.

A second end 215b of the fuse structure 215 may be an end of the fuse structure 215 away from the notch 216, and the second end 215b is connected to the end cap 212.

Optionally, in an embodiment of the present application, as shown in Figs. 4 and 5, the end cap assembly 210 is a square end cap assembly, the notch 216 is provided at a first position of the positive electrode terminal 214b, and a connection direction between the first position and the center of the positive electrode terminal 214b is defined as a first direction; and the end cap 212 is further provided with a negative electrode terminal 214a, a connection direction between the center of the negative electrode terminal 214a and the center of the positive electrode terminal 214b is defined as a second direction, and the first direction is different from the second direction.

Optionally, the second direction is the y direction, and the first direction is different from the second direction, that is, the first direction may be perpendicular to the second direction, or may be set at an acute or obtuse angle with the second direction. In this way, it is possible to avoid the problem of the notch 216 being closer to an edge of the end cap 212 in the second direction due to space insufficiency of the end cap 212 in the second direction. Accordingly it is possible to avoid the problem of insufficient mounting space of the fuse structure 215 due to an improper position of the notch 216.

Optionally, in an embodiment of the present application, the first direction is perpendicular to the second direction.

Optionally, as shown in Figs. 4 and 5, the end cap 212 includes a first edge 2121 and a second edge 2122 that are arranged opposite to each other, and a third edge 2123 and a fourth edge 2124 that are arranged opposite to each other. The first edge 2121 is adjacent to the third edge 2123 and the fourth edge 2124, and the second edge 2122 is adjacent to the third edge 2123 and the fourth edge 2124. The first direction may be the y direction or the extension direction of the first edge 2121 and the second edge 2122, and the second direction may be the x direction or the extension direction of the third edge 2123 and the fourth edge 2124.

Optionally, in the second direction, that is, in the x direction, a filling port 218 is provided between the positive electrode terminal 214b and the negative electrode terminal 214a, and the electrolyte solution may be injected into the battery cell through the filling port 218.

By providing the notch 216 at the first position, it is avoided that a distance between the notch 216 and the second edge 2122 is too small, and it is also avoided that a distance between the notch 216 and the filling port 218 is too small, so that the insufficiency of the space reserved for the fuse structure 215 can be avoided. In this way, the space reserved for the fuse structure 215 is sufficient, facilitating the mounting of the fuse structure 215.

Optionally, an insulating member is provided between the negative electrode terminal 214a and the end cap 212 so as to insulate the negative electrode terminal 214a from the end cap 212 or the housing 21.

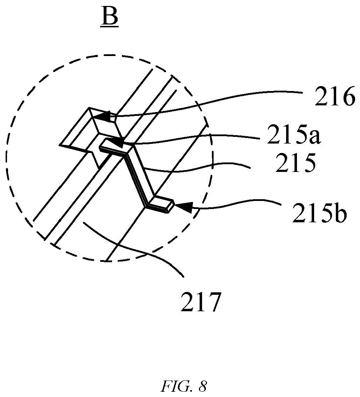

Fig. 7 is a schematic diagram of an end cap assembly according to an embodiment of the present application, and Fig. 8 is an enlarged schematic diagram of region B in Fig. 7. Optionally, as shown in Figs. 7 and 8, the end cap assembly 210 is a circular end cap assembly, the notch 216 is provided at a second position of the positive electrode terminal 214b, and the second position is a position on an edge of the positive electrode terminal 214b. In this way, the notch 216 is located at the edge of the positive electrode terminal 214b, facilitating the decrease of a distance between the notch 216 and the end cap 212 and thus facilitating the decrease of the length of the fuse structure 215, thereby reducing costs.

Optionally, in an embodiment of the present application, the second position is a position on the edge of the positive electrode terminal 214b that is farthest away from an edge of the end cap assembly 210. The edge of the end cap assembly 210 may be an edge 210a of the end cap 212 shown in Fig. 7, and the edge 210a has a circular contour. In this way, the space reserved for the fuse structure 215 is sufficient, facilitating the mounting of the fuse structure 215.

Optionally, in an embodiment of the present application, the notch 216 has a size of 1 mm-2 mm in a thickness direction of the positive electrode terminal 214b. In this way, the notch 216 may have an appropriate size range in the thickness direction of the positive electrode terminal 214b to facilitate the accommodation of the fuse structure 215.

Optionally, in an embodiment of the present application, the notch 216 has a size of 1 mm-4 mm in a third direction, the third direction is an extension direction of the first end 215a of the fuse structure 215, and the third direction is perpendicular to the thickness direction of the positive electrode terminal 214b. In this way, the notch 216 has an appropriate size in the third direction, facilitating the accommodation of the first end 215a of the fuse structure 215.

Optionally, in an embodiment of the present application, the notch 216 has a size of 1 mm-2 mm in a fourth direction, and the fourth direction is perpendicular to the third direction and the thickness direction of the positive electrode terminal 214b. In this way, it is convenient to accommodate the first end of the fuse structure 215 in the notch 216.

Optionally, with reference to Figs. 4 to 8, the thickness direction of the positive electrode terminal 214b may be the z direction, the third direction may be the y direction, and the fourth direction may be the x direction.

Optionally, in an embodiment of the present application, a protective structure is provided on an outer surface of the fuse structure 215. The protective structure may be a protective layer wrapping the outer surface of the fuse structure 215, and the protective structure may be made of polypropylene (PP), polyethylene (PE), PFE, etc. In this way, it is possible to avoid short circuiting or other phenomena caused by the contact between the fuse structure 215 and other components, and it is also possible to prevent the fuse structure 215 from breaking due to an external force.

Optionally, in an embodiment of the present application, the fuse structure 215 is attached to the insulating member 217. The fuse structure 215 may be attached to the insulating member 217 in such a way that the fuse structure 215 abuts against an outer surface of the insulating member 217. In this way, the reduction of the space occupied by the fuse structure 215 is facilitated, and the reduction of the impact of the external force on the fuse structure 215 is also facilitated.

Optionally, in an embodiment of the present application, the fuse structure 215 is a fuse wire. In this way, the fuse structure 215 is simple in structure and convenient to machine, facilitating the reduction of costs.

Optionally, in an embodiment of the present application, a protective structure is provided on an outer surface of the fuse wire. In this way, it is possible to avoid short circuiting or other phenomena caused by the contact between the fuse wire and other components, and it is also possible to prevent the fuse wire from breaking due to an external force.

Optionally, in an embodiment of the present application, the fuse wire has a cross-sectional area of 0.01 mm²-0.20 mm². In this way, the machining and formation the fuse wire are facilitated.

Optionally, the fuse wire may have a cross-sectional area of 0.05 mm²-0.1 mm², and the cross-sectional area of the fuse wire may be specifically set according to an actual situation and is not specifically limited in the embodiments of the present application.

Optionally, the fuse wire may be round, cubic or prismatic, which is not specifically limited in the embodiments of the present application.

Optionally, the fuse wire has a length of 3 mm-5 mm. The length of the fuse wire may be specifically set according to actual needs and is not specifically limited in the embodiments of the present application.

It should be understood that relevant parts in the embodiments of the present application may be referred to each other and will not be repeated for the sake of brevity.

An embodiment of the present application provides a battery cell 20, including: an electrode assembly 22; a housing 21 having an opening and configured to accommodate the electrode assembly 22; and an end cap assembly 210 in the above embodiments, the end cap assembly 210 covering the opening so as to enclose the electrode assembly 22 in the housing 21.

An embodiment of the present application provides a battery 10, including: a battery cell 20 in the above embodiment; and a case 11, the case 11 being configured to accommodate the battery cell 20.

An embodiment of the present application provides a power consuming device, including a battery 10 in the above embodiment, the battery 10 being configured to supply electric energy.

An embodiment of the present application provides an end cap assembly 210. The end cap assembly 210 includes an end cap 212 and a fuse structure 215. The end cap 212 is provided with a positive electrode terminal 214b, and an insulating member 217 is provided between the positive electrode terminal 214b and the end cap 212 to insulate the positive electrode terminal 214b from the end cap 212 when the battery cell is in a normal working condition. The fuse structure 215 electrically connects the end cap 212 to the positive electrode terminal 214b, so that the potential of the end cap 212 is the same as that of the positive electrode terminal 214b, that is, the potential of the housing 21 of the battery cell is the same as the potential of the positive electrode terminal 214b, the potential of the housing 21 is thus higher than that of a negative electrode terminal 214a, and the housing 21 can be prevented from being corroded. The fuse structure 215 is configured to be capable of melting when a current flowing through the fuse structure 215 is greater than the predetermined threshold, which is 0.1 A-10 A, so that when an external short-circuit test is performed on the battery module, once the current circuit inside a battery cell is disconnected, the remaining battery cells in the battery module generate a reverse voltage outside the battery cell, thus generating a current flowing through the fuse structure 215. When the current is greater than the predetermined threshold, the fuse structure is disconnected, and the positive electrode terminal 214b and the end cap 212 are insulated from each other so as to withstand most of the reverse voltage. In this way, the voltage between the negative electrode terminal 214a and the end cap 212 or the housing 21 is lower, so that the risk of electrolysis of an electrolyte solution can be reduced, the risk of fire or other phenomena can then be reduced, the requirements for the external short-circuit test are also be met, and the risk of failure of the external short-circuit test is reduced. Therefore, the technical solution of this embodiment of the present application can meet the requirements for the external short-circuit test while improving the performance of the battery.

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. An end cap assembly for a battery cell, the end cap assembly comprising:
an end cap (212) provided with a positive electrode terminal (214b), an insulating member (217) being provided between the positive electrode terminal (214b) and the end cap (212); and
a fuse structure (215), the fuse structure (215) electrically connecting the end cap (212) to the positive electrode terminal (214b), wherein the fuse structure (215) is configured to be capable of melting when a current flowing through the fuse structure (215) is greater than a predetermined threshold.

2. The end cap assembly according to claim 1, wherein the predetermined threshold is 0.1 A-10 A.

3. The end cap assembly according to claim 1 or 2, wherein the insulating member (217) is provided between the positive electrode terminal (214b) and the end cap (212) in a thickness direction of the end cap (212).

4. The end cap assembly according to any one of claims 1-3, wherein a surface of the positive electrode terminal (214b) protruding out of the end cap (212) is provided with a notch (216), and a first end (215a) of the fuse structure (215) is accommodated in the notch (216) so as to be connected to the positive electrode terminal (214b).

5. The end cap assembly according to claim 4, wherein the end cap assembly is a square end cap assembly, the notch (216) is provided at a first position of the positive electrode terminal (214b), and a connection direction between the first position and the center of the positive electrode terminal (214b) is defined as a first direction; and
the end cap (212) is further provided with a negative electrode terminal (214a), a connection direction between the center of the negative electrode terminal (214a) and the center of the positive electrode terminal (214b) is defined as a second direction, and the first direction is different from the second direction.

6. The end cap assembly according to claim 5, wherein the first direction is perpendicular to the second direction.

7. The end cap assembly according to claim 4, wherein the end cap assembly is a circular end cap assembly, the notch (216) is provided at a second position of the positive electrode terminal (214b), and the second position is a position on an edge of the positive electrode terminal (214b).

8. The end cap assembly according to claim 7, wherein the second position is a position on the edge of the positive electrode terminal (214b) that is farthest away from an edge of the end cap assembly.

9. The end cap assembly according to any one of claims 4-8, wherein the notch (216) has a size of 1 mm-2 mm in a thickness direction of the positive electrode terminal (214b).

10. The end cap assembly according to claim 9, wherein the notch (216) has a size of 1 mm-4 mm in a third direction, the third direction is an extension direction of the first end (215a) of the fuse structure (215), and the third direction is perpendicular to the thickness direction of the positive electrode terminal (214b).

11. The end cap assembly according to claim 10, wherein the notch has a size of 1 mm-2 mm in a fourth direction, and the fourth direction is perpendicular to the third direction and the thickness direction of the positive electrode terminal (214b).

12. The end cap assembly according to any one of claims 1-11, wherein the fuse structure (215) is a fuse wire.

13. The end cap assembly according to claim 12, wherein a protective structure is provided on an outer surface of the fuse wire.

14. The end cap assembly according to claim 12 or 13, wherein the fuse wire has a cross-sectional area of 0.01 mm²-0.20 mm².

15. The end cap assembly according to any one of claims 1-14, wherein the fuse structure (215) is attached to the insulating member (217).

16. A battery cell, comprising:
an electrode assembly (22);
a housing (21) having an opening and configured to accommodate the electrode assembly (22); and
an end cap assembly of any one of claims 1 to 15, the end cap assembly covering the opening so as to enclose the electrode assembly (22) in the housing (21).

17. A battery, comprising:
a battery cell of claim 16; and
a case (11), the case (11) being configured to accommodate the battery cell.

18. A power consuming device, comprising a battery of claim 17, the battery being configured to supply electric energy.
